# EUROPÄISCHE PATENTSCHRIFT

(11) **EP 0 950 181 B1**
(45) Veröffentlichungstag und Bekanntmachung des Hinweises auf die Patenterteilung: **06.09.2000**
(21) Anmeldenummer: 97951862.8
(22) Anmeldetag: 04.11.1997
(51) Int. Cl.: G01N 21/90

(54) **INSPEKTIONSMASCHINE FÜR FLASCHEN ODER DGL.**
INSPECTION MACHINE FOR BOTTLES OR SIMILAR
MACHINE POUR LE CONTROLE DE BOUTEILLES OU ANALOGUES

(43) Veröffentlichungstag der Anmeldung: 20.10.1999
(73) Patentinhaber: KRONES AG, 93068 Neutraubling (DE)
(72) Erfinder: EDER, Erich, D-93093 Donaustauf (DE)
(86) Internationale Anmeldenummer: EP9706081
(87) Internationale Veröffentlichungsnummer: WO9923480

(56) Entgegenhaltungen:
- EP-A- 0 124 164
- EP-A- 0 415 154
- EP-A- 0 487 402
- DE-A- 19 605 133

## Beschreibung

Die Erfindung betrifft eine Inspektionsmaschine für Flaschen o. dgl. gemäß dem Oberbegriff des Anspruchs 1.

Eine derartige Inspektionsmaschine ist durch die DE-A-196 05 133 bekannt, wobei der Zuförderer und der Abförderer fluchtend in einer Linie angeordnet sind und der die Lücke zwischen Zu- und Abförderer überbrückende Zwischenförderer gleichfalls linear verläuft. Zwischen der ersten Seiteninspektionsvorrichtung am Zuförderer und dem Zwischenförderer ist zusätzlich ein wiederum linear verlaufender Drehförderer angeordnet, bestehend aus zwei mit unterschiedlicher Geschwindigkeit angetriebenen endlosen Förderriemen, der die auf dem Zuförderer stehenden Flaschen vor dem Einlauf in den Zwischenförderer um einen bestimmten Winkel verdreht. Anschließend werden die Flaschen durch die mit gleicher Geschwindigkeit angetriebenen Fördermittel des Zwischenförderers sicher stehend an den Abförderer übergeben und dann in einem von der ersten Seiteninspektionsvorrichtung abweichenden Umfangsbereich von der zweiten Seiteninspektionsvorrichtung kontrolliert. Ungünstig ist hierbei der zusätzliche maschinelle Aufwand für den Drehförderer, der außerdem die Baulänge der Inspektionsmaschine verlängert.

Weiter ist aus der DE-U-93 13 115 eine Inspektionsmaschine mit einem Zuförderer, einem mit Abstand davon angeordneten Abförderer und einem rotationssymmetrische Flaschen zwischen Zu- und Abförderer überführenden Zwischenförderer bekannt, bei der eine erste Seiteninspektionsvorrichtung am Zuförderer, eine zweite Seiteninspektionsvorrichtung am Abförderer und eine Bodeninspektionsvorrichtung im Bereich der Lücke zwischen Zu- und Abförderer angeordnet ist. Der Zwischenförderer weist zwei an gegenüberliegenden Seiten der Flaschen angreifende, mit unterschiedlicher Geschwindigkeit angetriebene endlose Fördermittel auf, welche die Flaschen auf ihrem Weg vom Zuförderer zum Abförderer um einen bestimmten Winkel verdrehen. Die Flaschen werden somit drehend vom Zwischenförderer an den Abförderer abgegeben, können leicht ins Taumeln geraten und umkippen. Beschädigungen der zweiten Seiteninspektionsvorrichtung und schwerwiegende Betriebsstörungen sind die Folge. Außerdem kann,durch die Eigenrotation der Flaschen im Bereich der Bodeninspektionsvorrichtung deren Funktion gestört werden.

Der Erfindung liegt die Aufgabe zugrunde, bei einer Inspektionsmaschine der eingangs genannten Art den maschinellen Aufwand und die Baulänge zu verringern.

Diese Aufgabe wird erfindungsgemäß durch die im Kennzeichen des Anspruchs 1 angegebenen Merkmale gelöst.

In einer erfindungsgemäßen Inspektionsmaschine werden die Flaschen im bogenförmigen Bereich des Zwischenförderers ohne Drehung um ihre Raummittelachse sozusagen parallel zu sich selbst transportiert, so daß alle durch eine Eigenrotation der Flaschen begründeten Störungsmöglichkeiten absolut entfallen. Trotzdem ergibt sich aufgrund der winkelförmigen Anordnung von Zu- und Abförderer auf diesen eine unterschiedliche Winkelposition der Flaschen, so daß die beiden Seiteninspektionsvorrichtungen unterschiedliche Umfangsbereiche der Flaschen betrachten können. Ein zusätzlicher Drehförderer ist nicht erforderlich und es ergibt sich eine besonders kompakte Bauweise der Inspektionsmaschine.

Vorteilhafte Weiterbildungen der Erfindung, die alle zu einem besonders stabilen Gefäßtransport beitragen, sind in den Unteransprüchen enthalten.

Besonders hervorzuheben sind die Weiterbildungen nach den Ansprüchen 4 und 5, die eine unterschiedliche Winkelposition der Flaschen auf dem Zuförderer einerseits und auf dem Abförderer andererseits um ca. 90 Grad ergeben, was für die Genauigkeit der Seitenwandinspektion optimal ist Im Nachstehenden wird ein Ausführungsbeispiel der Erfindung anhand der Zeichnungen beschrieben. Es zeigen:
- Fig. 1: die Draufsicht auf eine Inspektionsmaschine
- Fig. 2: den Schnitt A B nach Fig. 1.

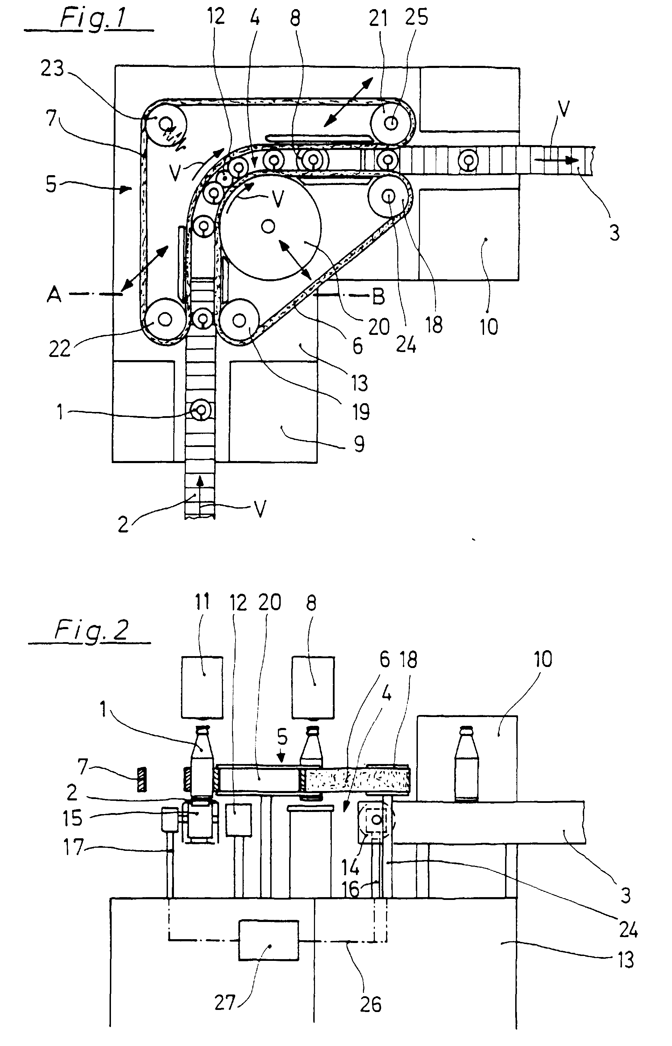

Die Inspektionsmaschine nach Fig. 1 und 2 ist zum Überprüfen von leeren Mehrwegflaschen aus Glas mit rotationssymmetrischer Grundform, im Nachstehenden Flaschen 1 genannt, auf Verschmutzungen und Fremdkörper im Bereich des Bodens und der Seitenwand und auf Ausbrüche im Bereich der Mündung eingerichtet. Sie weist ein Gehäuse 13 auf, an dessen Oberseite ein Zuförderer 2, ein Abförderer 3 und ein Zwischenförderer 5 für die die Inspektionsmaschine aufrechtstehend auf einer Bewegungsbahn in Form eines abgerundeten rechten Winkels durchlaufenden Flaschen 1 angeordnet sind.

Der geradlinige Zuförderer 2 und der dazu im rechten Winkel angeordnete geradlinige Abförderer 3 weisen Scharnierbandketten auf, die über Kettenräder 14, 15 laufen und durch Antriebswellen 16, 17 angetrieben werden. Die Scharnierbandketten bilden horizontale Förderflächen, auf denen die Flaschen 1 stehen und soweit erforderlich durch nicht gezeigte Geländer geführt werden. Zwischen dem Zuförderer 2 und dem mit Abstand hierzu angeordneten Abförderer 3 ist eine Lücke 4 ausgebildet, deren Länge ein Mehrfaches eines Flaschendurchmessers beträgt. In dieser Lücke 4 sitzt eine Abblasvorrichtung 12 für den Flaschenboden und dahinter eine Bodeninspektionsvorrichtung 8 mit einer unter den Flaschen 1 angeordneten Lichtquelle und einer über den Flaschen 1 angeordneten Kamera. Außerdem ist eine erste Seiteninspektionsvorrichtung 9 mit einer Lichtquelle und einer Kamera am Zuförderer 2 und eine zweite gleichartige Seiteninspektionsvorrichtung 10 am Abförderer 3 angeordnet. Die Flaschen 1 stehen im Bereich der beiden Seiteninspektionsvorrichtungen 9, 10 frei und ohne Eigenrotation auf den Scharnierbandketten des Zuförderers 2 bzw. Abförderers 3 und können daher über ihre gesamte Höhe ungestört kontrolliert werden. Weiter ist im Bereich der Lücke 4 über den Flaschen 1 unmittelbar im Anschluß an den Zuförderer 2 oder noch über diesem eine Mündungsinspektionsvorrichtung 11 über den Flaschen 1 vorgesehen.

Der Zwischenförderer 5 überbruckt die Lücke 4 zwischen Zuförderer 2 und Abförderer 3 und bestreicht zu diesem Zweck den Endbereich des Zuförderers 2 und den Anfangsbereich des Abförderers 3. Er weist zwei endlose Fördermittel 6, 7 auf, gebildet durch Zahnriemen mit einem elastischen Belag aus Schwammgummi an der Außenseite. Die beiden Fördermittel 6, 7 laufen mit einem Abstand, der etwas kleiner ist als der Flaschendurchmesser, in einer horizontalen Ebene um und klemmen so die im Endbereich des Zuförderers 2 ankommenden Flaschen 1 nach dem Passieren der ersten Seiteninspektionsvorrichtung 9 zwischen sich ein. Anschließend werden die Flaschen 1 ohne Bodenunterstützung über die Lücke 4 bzw. über die Abblasvorrichtung 12 und durch die Bodeninspektionsvorrichtung 8 getragen und dann auf dem Abförderer 3 abgestellt.

Jedes Fördermittel 6, 7 läuft jeweils über drei Riemenscheiben 18 bis 23, die auf den Ecken von Dreiecken angeordnet sind. Die auslaufseitigen Riemenscheiben 18, 21 sind auf senkrechten Antriebswellen 24, 25 befestigt. Diese werden durch ein Getriebe 26 von einem Motor 27 synchron zum Zuförderer 2 und Abförderer 3 angetrieben, derart, daß die beiden Fördermittel 6, 7 die gleiche Geschwindigkeit V und Transportrichtung aufweisen wie der Zuförderer 2 und der Abförderer 3. Die Riemenscheiben 18 bis 23 sind derart angeordnet, daß die in Transportrichtung laufenden benachbarten Trume der beiden Fördermittel 6, 7 für die Flaschen 1 eine kanalartige Bewegungsbahn nach Art eines abgerundeten rechten Winkels definieren. Dabei fluchtet der einlaufseitige geradlinige Bereich der Bewegungsbahn mit dem Zuförderer 2 und der auslaufseitige geradlinige Bereich mit dem Abförderer 3, während der kreisbogenförmige Bereich sich nahtlos und stoßfrei an die geradlinigen Bereiche anschließt und einen Bogenwinkel von 90 Grad aufweist.

Wie die Fig. 2 zeigt, ist die Mündungsinspektionsvorrichtung 11 im ersten geradlinigen Bereich, die Bodeninspektionsvorrichtung 8 im zweiten, längeren geradlinigen Bereich und die Abblasvorrichtung 12 im bogenförmigen Bereich der Bewegungsbahn der Flaschen 1 im Zwischenförderer 5 angeordnet. Dessen Bewegungsbahn wird somit optimal ausgenutzt, wobei ohne weiteres noch zusätzliche Inspektionsvorrichtungen, z.B. für Lauge, installiert werden können.

Aufgrund der vorbeschriebenen geometrischen und geschwindigkeitsmäßigen Verhaltnisse werden die Flaschen 1 durch die endlosen Fördermittel 6, 7 des Zwischenförderers 5 ohne Eigenrotation auf zwei rechtwinkelig zueinander angeordneten geradlinigen Bahnabschnitten und dazwischen auf einer Kreisbogenbahn von 90 Grad, gleichfalls ohne Eigenrotation, transportiert. Die räumliche Winkelposition der Flaschen 1 bleibt dabei unverändert, wie durch Markierungsstriche angedeutet ist. Dies führt aufgrund der winkelförmigen Anordnung von Zuförderer 2 und Abförderer 3 dazu, daß die Flaschen 1 auf dem Abförderer 3 gegenüber dem Zuförderer 2 bezüglich ihrer Translationsbewegung um ca. 90 Grad verdreht erscheinen. Die beiden Seiteninspektionsvorrichtungen 9, 10 bestreichen somit unterschiedliche Wandungsbereiche der Flaschen 1, was zu der erwünschten Genauigkeit führt. Selbstverständlich sind auch andere Winkel zwischen dem Zuförderer 2 und dem Abförderer 3 mit entsprechend anderen bogenförmigen Bahnabschnitten möglich, die zu entsprechend größeren oder kleineren Winkelunterschieden zwischen den Inspektionsbereichen der beiden Seiteninspektionsvorrichtungen 9, 10 führen.

Um eine einfache Umstellung des Zwischenförderers 5 auf verschiedene Flaschendurchmesser zu ermöglichen, ist das Fördermittel 6 einschließlich seiner Riemenscheiben (18 bis 20) und Führungsschienen als ganzes in Richtung des Doppelpfeils verstellbar, während beim Fördermittel 7 der Anfangsabschnitt mit der Riemenscheibe 22 und den entsprechenden Führungsschienen einerseits und der Endabschnitt mit der Riemenscheibe 21 und den entsprechenden Führungsschienen andererseits getrennt voneinander in Richtung der Doppelpfeile verstellbar sind. Die Riemenscheibe 23 ist hierzu federnd aufgehängt. Auf diese Weise wird bei unterschiedlichen Flaschendurchmessern die Mitte der Bewegungsbahn für die Flaschen 1 exakt eingehalten, was für das Inspektionsergebnis von Vorteil ist. Die Verstellung erfolgt in der üblichen Weise durch nicht gezeigte Schlitten und Gewindespindeln, die parallel zu den Doppelpfeilen angeordnet und synchron antreibbar sind. Die gefederte Riemenscheibe 23 sorgt außerdem dafür, daß der Förderriemen 7 im Bereich der Kreisbogenbahn elastisch an die Flaschen 1 angedrückt wird, die hier sozusagen die Führung des Förderriemens 7 übernehmen.

## Patentansprüche

1. Inspektionsmaschine für Flaschen oder dgl., mit einem Zuförderer (2), einem Abförderer (3), einem eine Lücke (4) zwischen diesen überbrückenden Zwischenförderer (5), der mindestens zwei an gegenüberliegenden Seiten der Gefäße angreifende, mit der gleichen Geschwindigkeit antreibbare endlose Fördermittel (6, 7) aufweist, welche die Gefäße ohne Drehung vom Zuförderer auf den Abförderer überführen, mit einer im Bereich der Lücke angeordneten Bodeninspektionsvorrichtung (8), mit einer am Zuförderer angeordneten ersten Seiteninspektionsvorrichtung (9) und mit einer am Abförderer angeordneten zweiten Seiteninspektionsvorrichtung (10), dadurch gekennzeichnet, daß der Zuförderer (2) und der Abförderer (3) winkelförmig zueinander verlaufen und daß der Zwischenförderer (5) zumindest teilweise bogenförmig verläuft.

2. Inspektionsmaschine nach Anspruch 1, dadurch gekennzeichnet, daß der Zwischenförderer (5) mindestens zwei an gegenüberliegenden Seiten der Flaschen angreifende, mit der gleichen Geschwindigkeit antreibbare, endlose Förderriemen (6, 7) aufweist.

3. Inspektionsmaschine nach Anspruch 2, dadurch gekennzeichnet, daß die Förderriemen (6, 7) mit ihrem einlaufseitigen Bereich den Zuförderer (2) und mit ihrem auslaufseitigen Bereich den Abförderer (3) überlappen.

4. Inspektionsmaschine nach einem der Ansprüche 1 bis 3, dadurch gekennzeichnet, daß der Zuförderer (2) und der Abförderer (3) im wesentlichen rechtwinkelig zueinander verlaufen.

5. Inspektionsmaschine nach Anspruch 4, dadurch gekennzeichnet, daß der Zwischenförderer (5) einen kreisbogenförmigen Bereich von ca. 90 Grad aufweist.

6. Inspektionsmaschine nach einem der Ansprüche 1 bis 5, dadurch gekennzeichnet, daß sich an den bogenförmigen Bereich des Zwischenförderers (5) beiderseits geradlinige Bereiche anschließen, die parallel zum Zuförderer (2) bzw. zum Abförderer (3) verlaufen.

7. Inspektionsmaschine nach Anspruch 6, dadurch gekennzeichnet, daß die Bodeninspektionsvorrichtung (8) im geradlinigen Bereich des Zwischenförderers (5) angeordnet ist, der parallel zum Abförderer (3) verläuft.

8. Inspektionsmaschine nach Anspruch 6 oder 7, dadurch gekennzeichnet, daß im geradlinigen Bereich des Zwischenförderers (5), der parallel zum Zuförderer (2) verläuft, eine Mündungsinspektionsvorrichtung (11) angeordnet ist.

9. Inspektionsmaschine nach einem der Ansprüche 1 bis 8, dadurch gekennzeichnet, daß im bogenförmigen Bereich des Zwischenförderers (5) eine Abblasvorrichtung (12) für den Flaschenboden angeordnet ist.

10. Inspektionsmaschine nach einem der Ansprüche 1 bis 9, dadurch gekennzeichnet, daß die Fördermittel (6, 7) des Zwischenförderers (5) ggf. abschnittsweise quer oder schräg zur Transportrichtung verstellbar sind.

11. Inspektionsmaschine nach einem der Ansprüche 2 bis 10, dadurch gekennzeichnet, daß jeder Förderriemen (6, 7) über mindestens drei an den Ecken eines Polygons angeordnete Riemenscheiben (18 bis 23) umläuft.

## Claims

1. Inspection machine for bottles or the like, comprising a delivery conveyer (2), a removal conveyer (3), an intermediate conveyer (5) which bridges a gap (4) between the above and which has at least two continuous conveying means (6, 7) which engage at opposite sides of the containers and which are driven at the same speed, which transfer the containers without rotation from the delivery conveyer to the removal conveyer, with a base inspection device (8) arranged in the area of the gap, with a first side inspection device (9) arranged on the delivery conveyer and a second side inspection device (10) arranged on the removal conveyer, **characterised in that** the delivery conveyer (2) and the removal conveyer (3) extend angularly to each other and the intermediate conveyer extends at least partially arcshaped.

2. Inspection machine according to Claim 1, **characterised in that** the intermediate conveyer (5) comprises at least two continuous conveyer belts (6, 7) which engage at opposite sides of the bottles and which are driven at the same speed.

3. Inspection machine according to Claim 2, **characterised in that** the conveyer belts (6, 7) overlap the delivery conveyer (2) with their area on the in-side and the delivery conveyer (3) with their area at the out-side.

4. Inspection machine according to one of Claims 1 to 3, **characterised in that** the delivery conveyer (2) and the removal conveyer (3) extend essentially rectangularly to each other.

5. Inspection machine according to Claim 4, **characterised in that** the intermediate conveyer (5) comprises a circularly shaped area of approximately 90 degrees.

6. Inspection machine according to one of Claims 1 to 5, **characterised in that** adjacent to the arcshaped area of the intermediate conveyer (5) are on both sides straight areas which extend parallel to the delivery conveyer (2) or the removal conveyer (3).

7. Inspection machine according to Claim 6, **characterised in that** the base inspection device (8) is arranged in the straight area of the intermediate conveyer (5) which extends parallel to the removal conveyer (3).

8. Inspection machine according to Claim 6 or 7, **characterised in that** a mouth inspection device (11) is arranged in the straight area of the intermediate conveyer (5) which extends parallel to the delivery conveyer (2).

9. Inspection machine according to one of Claims 1 to 8, **characterised in that** a blow-off device (12) for the bottle base is arranged in the arcshaped area of the intermediate conveyer (5).

10. Inspection machine according to one of Claims 1 to 9, **characterised in that** the conveying means (6, 7) of the intermediate conveyer (5) are, if appropriate, sectionally adjustable transversely or at diagonally to the transport direction.

11. Inspection machine according to one of Claims 2 to 10, **characterised in that** each conveyer belt (6, 7) moves around over at least three belt discs (18 to 23) arranged at the corners of a polygon.

## Revendications

1. Machine pour le contrôle de bouteilles ou récipients analogues, comprenant :
- un transporteur d'amenée (2), un transporteur de sortie (3),
- un transporteur intermédiaire (5) formant pont au-dessus d'un intervalle (4) séparant les deux transporteurs précédents, comportant deux moyens d'avancement sans fin (6, 7) entraînés à la même vitesse, saisissant les récipients sur deux côtés opposés et les faisant passer sans les faire tourner du transporteur d'amenée au transporteur de sortie,
- un dispositif d'inspection de fond (8), situé dans la zone de l'intervalle,
- un premier dispositif d'inspection latérale (9) monté sur le transporteur d'amenée (2) et un second dispositif d'inspection latérale (10) monté sur le transporteur de sortie (3),
caractérisée en ce que
les transporteurs d'amenée (2) et de sortie (3) font entre eux un angle, et le transporteur intermédiaire (5) est au moins en partie de forme courbe.

2. Machine selon la revendication 1,
caractérisée en ce que
le transporteur intermédiaire (5) comprend au moins deux courroies transporteuses (6, 7) sans fin, entraînées à la même vitesse et saisissant les bouteilles respectivement sur des côtés opposés.

3. Machine selon la revendication 2,
caractérisée en ce que
les courroies transporteuses (6, 7) chevauchent par leur zone d'entrée le transporteur d'amenée (2), et par leur zone de sortie le transporteur de sortie (3).

4. Machine selon l'une quelconque des revendications 1 à 3,
caractérisée en ce que
les transporteurs d'amenée (2) et de sortie (3) sont disposés essentiellement à angle droit.

5. Machine selon la revendication 4,
caractérisée en ce que
le transporteur intermédiaire (5) comporte une zone dessinant un arc de cercle d'environ 90 degrés.

6. Machine selon l'une quelconque des revendications 1 à 5,
caractérisée en ce que
à la zone en arc de cercle du transporteur intermédiaire (5) sont raccordés de part et d'autre des zones rectilignes, parallèles respectivement au transporteur d'amenée (2) et au transporteur de sortie (3).

7. Machine selon la revendication 6,
caractérisée en ce que
le dispositif d'inspection de fond (8) est monté dans la zone rectiligne du transporteur intermédiaire (5), qui est parallèle au transporteur de sortie (3).

8. Machine selon l'une quelconque des revendications 6 ou 7,
caractérisée en ce que
dans la zone rectiligne du transporteur intermédiaire (5), qui est parallèle au transporteur d'amenée (2) se trouve un dispositif d'inspection d'embouchure (11).

9. Machine selon l'une des quelconque des revendications 1 à 8,
caractérisée en ce que
dans la zone en courbe du transporteur intermédiaire (5) se trouve un dispositif de soufflage (12) agissant sur le fond des bouteilles.

10. Machine selon l'une quelconque des revendications 1 à 9,
caractérisée en ce que
les moyens d'avancement (6, 7) du transporteur intermédiaire (5) peuvent être déplacés, éventuellement de manière partielle, transversalement ou obliquement par rapport à la direction de transport.

11. Machine selon l'une quelconque des revendications 2 à 10,
caractérisée en ce que
chaque courroie transporteuse (6, 7) circule sur au moins trois poulies (18 à 23) situées aux sommets d'un polygone.
